# EUROPÄISCHE PATENTSCHRIFT

(11) **EP 3 420 260 B1**
(45) Veröffentlichungstag und Bekanntmachung des Hinweises auf die Patenterteilung: **01.06.2022**
(21) Anmeldenummer: 17710490.8
(22) Anmeldetag: 22.02.2017
(51) Int. Cl.: F16L 9/14, C04B 41/63

(54) **VORRICHTUNG ZUM FÜHREN VON FLÜSSIGKEIT UND HERSTELLUNGSVERFAHREN**
DEVICE FOR GUIDING LIQUID AND PRODUCTION METHOD
DISPOSITIF DE GUIDAGE DE LIQUIDE ET PROCÉDÉ DE FABRICATION DUDIT DISPOSITIF

(30) Priorität: 24.02.2016 DE 102016103278
(43) Veröffentlichungstag der Anmeldung: 02.01.2019
(73) Patentinhaber: ACO Ahlmann SE & Co. KG, 24782 Büdelsdorf (DE)
(72) Erfinder: VOLKMANN, Karsten, 21394 Südergellersen (DE); MIEZE, Jan, 24111 Kiel (DE)
(74) Vertreter: Kilchert, Jochen
(86) Internationale Anmeldenummer: PCT/EP2017/054015
(87) Internationale Veröffentlichungsnummer: WO 2017/144511

(56) Entgegenhaltungen:
- EP-A1- 0 556 533
- DE-A1- 3 429 881
- DE-A1- 4 137 566
- US-A1- 2009 176 058

## Beschreibung

Die Erfindung betrifft eine Vorrichtung zum Führen von Flüssigkeit, insbesondere eine Entwässerungsrinne, mit den Merkmalen des Oberbegriffs des Anspruchs 1 sowie ein Verfahren zum Herstellen einer solchen Vorrichtung.

Eine gattungsgemäße Vorrichtung ist aus EP 0 556 533 A1 bekannt.

Um einen Rinnenstrang bestehend aus mehreren hintereinander verlegten Entwässerungsrinnen auch im Übergangsbereich von Rinne zu Rinne fluiddicht auszubilden, können in diesem Bereich Dichtmittel zwischen zwei Rinnen eingebracht werden. Hierzu kann die Übergangsfuge auf der Baustelle mit einem Dichtstoff ausgefüllt werden, um eine fluiddichte Verbindung zwischen dem Entwässerungsrinnen herzustellen. Es ist jedoch auch möglich, vorgefertigte Dichtungen einzusetzen, die am Rinnenkörper angeordnet sind. Häufig sind dazu am Rinnenkörper besondere Geometrien für die Aufnahme der Dichtungen erforderlich.

Es hat sich gezeigt, dass die Ausbildung von speziellen Geometrien für die Aufnahme von Dichtungen im Stirnseitenbereich von Entwässerungsrinnen nicht einfach zu bewerkstelligen ist. Dies resultiert zum einen insbesondere daraus, dass im Stirnseitenbereich wenig Material zur Ausbildung von z.B. Nuten zur Aufnahme der Dichtung zur Verfügung steht, die moderne Entwässerungsrinnen in Bezug auf das verwendete Material optimiert sind und möglichst geringe Wanddicken aufweisen. Des Weiteren ist es problematisch mit den verwendeten bestimmten Materialien, insbesondere (grob)körnige Materialien wie zementgebundenen Beton oder Polymerbeton, feine Strukturen wie z.B. enge Nuten für die Aufnahme von Dichtungen auszubilden.

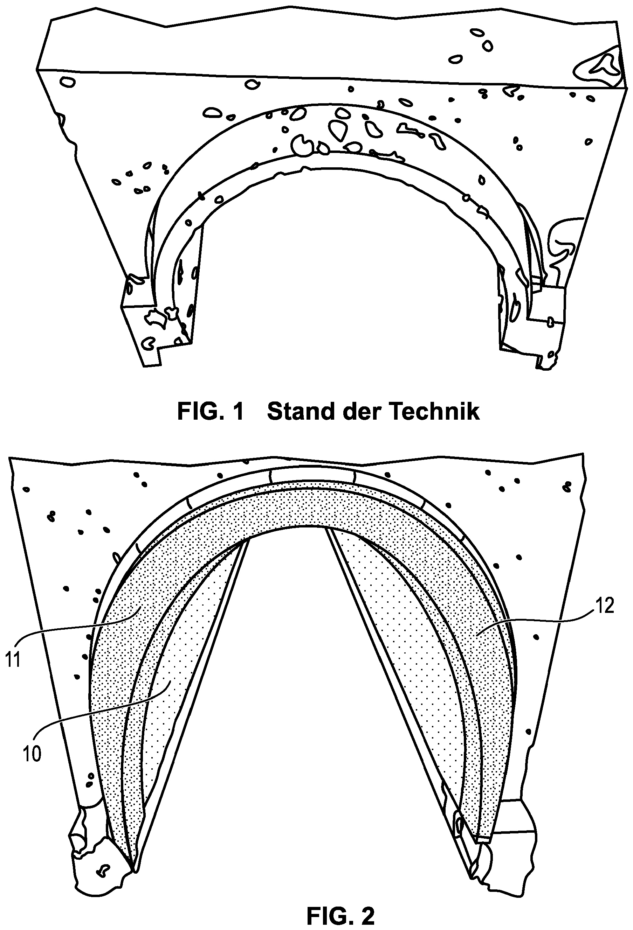

Gerade bei Polymerbetonrinnen können durch den Herstellungsprozess, insbesondere beim Füllen der Form, Fehlstellen in der Form von Poren im Bereich der Nut für die Aufnahme der Dichtung entstehen, wie beispielhaft in Fig. 1 dargestellt.

Aufgrund der Poren in diesem Bereich ist eine fluiddichte Verbindung von Rinne zu Rinne trotz der eingebrachten Dichtung nicht mehr sicher zu gewährleisten. Je nach Häufigkeit, Lage und Anzahl der Poren ist es möglich, dass die Flüssigkeit (z.B. Wasser) trotz Dichtung aufgrund der Poren in diesem Bereich aus der Rinne unkontrolliert austritt. Insbesondere wenn umweltunverträgliche Flüssigkeiten wie z.B. Öle, Benzin o.ä. in die Rinne gelangt sind, dürfen diese jedoch nicht ins Erdreich eindringen.

Die im Stand der Technik bekannten Dichtungen wirken nicht ausreichend sicher oder sind aufwändig in der Herstellung. Beispielsweise beschreibt DE 35 24 282 C1 eine Dichtung für Beton-Fertigrohre mit Ringen, die einen umlaufenden und sich gegen radialen Zug widersetzenden Fortsatz aufweisen, der in das die Rohrwandung bildende Material eingebettet ist. Die Ringe bestehen aus einem vulkanisierbaren oder verklebbaren Kunststoff- oder Gummimaterial und werden aneinandergeklebt. Alternativ kommen Innenauskleidungen aus PVC-Folien zum Einsatz, wie in DE 28 04 814 A1 gezeigt, deren Verbindung mit dem Betonrohr problematisch ist.

Die eingangs genannte EP 0 556 533 A1 beschreibt ein Betonrohr mit einem Spitz- und Muffenende, die als Anschlussstücke fungieren und aus Polymerbeton bestehen. Dazu werden zwei Endteile aus Polymerbeton auf das zu verarbeitende Betonrohr aufgesetzt und dann anschließend mit Polymerbeton beschichtet. Darauf wird eine Deckschicht auf der Basis ungesättigter Polyesterharze aufgebracht. Zur Herstellung eines solchen Betonrohres sind mehrere Beschichtungsschritte erforderlich.

Der Erfindung liegt die Aufgabe zu Grunde, die Vorrichtung zum Führen von Flüssigkeit, nämlich Entwässerungsrinne, der eingangs genannten Art dahingehend zu verbessern, dass auf einfache Art und Weise ein Funktionsbereich mit guten Dichtungseigenschaften gebildet werden kann. Der Erfindung liegt ferner die Aufgabe zu Grunde, ein entsprechendes Verfahren anzugeben.

Diese Aufgabe wird durch die Vorrichtung nach Patentanspruch 1 gelöst. Mit Blick auf das Verfahren wird die Aufgabe durch den Gegenstand des Anspruchs 11 gelöst.

Erfindungsgemäß wird eine Vorrichtung zum Führen von Flüssigkeit, nämlich eine Entwässerungsrinne, mit einem Führungsabschnitt und wenigstens einem Funktionsbereich vorgeschlagen. Der Führungsabschnitt ist aus Beton gebildet, der ein Bindemittel und einen Füllstoff mit einer ersten Korngröße K₁ aufweist. Der Funktionsbereich ist zumindest teilweise aus einem gefüllten Reaktionsharz gebildet, das einen Füllstoff mit einer zweiten Korngröße K₂ aufweist. Es gilt, dass K₂ < K₁ ist.

Die Erfindung hat den Vorteil, dass der Funktionsbereich aus einem anderen Werkstoff als der Führungsabschnitt gebildet ist, dessen Eigenschaften unabhängig von den Eigenschaften des Führungsabschnittes optimiert werden können. Es handelt sich deshalb um eine Vorrichtung, insbesondere Entwässerungsrinne, die aus einem Hybridwerkstoff hergestellt ist. Die verwendeten Materialien unterscheiden sich dabei zumindest in der Korngröße. Erfindungsgemäß weist der Füllstoff des Reaktionsharzes im Funktionsbereich eine kleinere Korngröße als der Beton des Führungsabschnittes auf. Durch den im Vergleich zum Führungsabschnitt verwendeten feineren Füllstoff wird im Funktionsbereich eine glatte und im Wesentlichen porenfreie oder zumindest porenarme Oberfläche erreicht, die die Dichtigkeit des Funktionsbereichs verbessert, ohne dass hierfür weitere Maßnahmen erforderlich sind.

Vorzugsweise beträgt die zweite Korngröße K₂, d.h. die Korngröße des Füllstoffes des Reaktionsharzes höchstens 1 mm, insbesondere höchstens 500 µm, insbesondere höchstens 250 µm. Je kleiner die Korngröße gewählt wird, umso glatter und porenärmer kann der Funktionsbereich ausgebildet werden.

Die Bestimmung der Korngröße erfolgt erfindungsgemäß nach dem sogenannten Grindometertest in Anlehnung an die EN ISO 1524.

Bei einer weiteren bevorzugten Ausführung weist der Funktionsbereich eine Oberflächenrauheit k [mm] von 0,02 bis 0,05, insbesondere von 0,03-0,04, auf. Die Oberflächenbeschaffenheit des Funktionsbereichs ist damit der Oberflächenbeschaffenheit des Führungsabschnitts aus Beton überlegen.

Vorzugsweise ist der Beton ein Polymerbeton. Es ist auch denkbar, einen zementgebundenen Beton zur Herstellung des Führungsabschnittes zu verwenden, wobei die Verwendung von Polymerbeton bevorzugt ist.

Wenn die Bindemittel des Betons und das Reaktionsharz aus demselben Werkstoff, insbesondere einem duroplastischen Harz bestehen, können der Führungsabschnitt und der Funktionsbereich monolithisch gebildet sein. Haftvermittler oder Klebestoff sind dann nicht erforderlich. Bei unterschiedlichen Werkstoffen können der Führungsabschnitt und der Funktionsbereich verklebt werden.

Bei einer weiteren bevorzugten Ausführungsform weist der Beton, insbesondere der Polymerbeton, einen Bindemittelanteil H₁ und das Reaktionsharz einen Bindemittelanteil H₂ auf. Dabei gilt, dass H₂ > H₁ ist. Mit anderen Worten ist der Bindemittelanteil des Reaktionsharzes größer als der Bindemittelanteil des Polymerbetons. Damit wird die Dichtigkeit und Oberflächengüte des Funktionsbereichs weiter verbessert.

Vorzugsweise beträgt der Bindemittelanteil H₂ > 20 Gew.-%, insbesondere > 30 Gew.-%, insbesondere > 50 Gew.-%.

Der Führungsabschnitt und der Funktionsbereich sind stoffschlüssig verbunden. Dies kann durch die monolithische Ausbildung bei denselben Bindemitteln des Betons und des Reaktionsharzes oder durch Verkleben des Funktionsabschnittes und des Funktionsbereiches erfolgen.

In einer besonders bevorzugten Ausführungsform bildet der Funktionsbereich eine Schicht aus dem gefüllten Reaktionsharz, die auf dem Führungsabschnitt aus Beton angeordnet ist. Damit lässt sich auf einfache Weise ein konturtreuer Funktionsbereiches herstellen, wobei die Oberflächengüte des Funktionsbereichs im Vergleich zum Führungsabschnitt verbessert wird.

Die Dicke der Schicht kann weniger als 2 mm, insbesondere von 1 mm bis 1 µm betragen. Durch die im Vergleich zum Füllstoff des Betons kleinere Korngröße des Füllstoffs des Reaktionsharzes wird selbst bei kleinen Schichtdicken eine ausreichende Dichtigkeit erreicht. Die im Beton des Führungsabschnittes vorhandenen Poren werden durch die Schicht aufgefüllt bzw. versiegelt.

Der Funktionsbereich kann ein Formteil aus dem gefüllten Reaktionsharz bilden, dessen Querschnittsform im Wesentlichen der Querschnittsform des Führungsabschnittes aus Beton entspricht, wobei das Formteil und der Führungsabschnitt fluchtend angeordnet sind. Das Formteil kann vorgeformt und dann mit dem Führungsabschnitt verbunden werden. Dadurch können größere Wandstärken des Formteils realisiert werden, so dass der Funktionsbereich hinsichtlich der Festigkeit optimiert werden kann.

Der Funktionsbereich kann beispielsweise eine Dichtung zur Verbindung des Führungsabschnittes mit weiteren Komponenten, insbesondere mit Rinnenelementen bilden. Die Erfindung ist nicht auf Dichtungen zwischen Rinnenelementen beschränkt, sondern erstreckt sich auch auf andere Funktionsbereiche im Zusammenhang mit Vorrichtungen zum Führen von Flüssigkeit, insbesondere Entwässerungsrinnen, bei denen die Dichtigkeit, insbesondere eine lokale Dichtigkeit, eine Rolle spielt.

Das erfindungsgemäße Verfahren beruht auf dem Gedanken, eine Vorrichtung zum Führen von Flüssigkeit, nämlich eine Entwässerungsrinne, nach Anspruch 1, dadurch herzustellen, dass das gefüllte Reaktionsharz in pastöser Form auf den Führungsabschnitt aus Beton zur Bildung des Funktionsbereichs aufgebracht und ausgehärtet wird. Alternativ kann ein Formteil aus dem gefüllten Funktionsharz gebildet werden, das mit dem Führungsabschnitt aus Beton verbunden wird.

Die Erfindung wird nachfolgend mit weiteren Einzelheiten anhand der Abbildungen näher erläutert. Hierbei zeigen
- Fig. 1: die Stirnseite einer Entwässerungsrinne mit einer Nut für die Aufnahme der Dichtung (Stand der Technik);
- Fig. 2: die Stirnseite einer Entwässerungsrinne aus Polymerbeton mit einem Funktionsbereich aus einem gefüllten Reaktionsharz;
- Fig. 3: den Stirnbereich einer Entwässerungsrinne mit einem bündig abschließenden Funktionsbereich; und
- Fig. 4: die Stirnseite einer weiteren Entwässerungsrinne mit einem modifizierten Querschnittsprofil, bei dem der Funktionsbereich bündig mit dem Führungsabschnitt abschließt.

In Fig. 1 sind die im Stand der Technik im Zuge der Herstellung auftretenden Poren oder Lunker im Sohlenbereich der Dichtung gut zu sehen. Diese Fehlstellen beeinträchtigen die Dichtigkeit in der Übergangsfuge zwischen den einzelnen Rinnenkörpern.

Fig. 2 zeigt ein erfindungsgemäßes Beispiel für eine Entwässerungsrinne mit einem Führungsabschnitt 10 und einem Funktionsbereich 11. Der Führungsabschnitt 10 ist bei dem Ausführungsbeispiel gemäß Fig. 2 der Rinnenkörper, durch den im Gebrauch die Flüssigkeit, insbesondere Wasser fließt. Der Funktionsabschnitt 11 befindet sich am Ende der Entwässerungsrinne und dient als Dichtung. Derartige Entwässerungsrinnen werden beispielsweise zur Oberflächenentwässerung von Straßen eingesetzt.

Der Führungsabschnitt 10 gemäß Fig. 2 ist aus Polymerbeton gebildet. Es ist möglich, anstelle des Polymerbetons zementgebundenen Beton zu verwenden. Der Polymerbeton weist in an sich bekannter Weise ein Bindemittel, beispielsweise ein Polyesterharz, und einen Füllstoff mit einer ersten Korngröße K₁ auf. Zur Herstellung des Funktionsbereichs 10 kommt ein gefülltes Reaktionsharz zum Einsatz, das ein Bindemittel, beispielsweise ein duroplastisches Harz und einen Füllstoff aufweist, dessen Korngröße K₂ kleiner ist als die Korngröße K₁ des Polymerbetons im Bereich des Führungsabschnittes 10. Konkret wird für den Funktionsbereich 10 ein Reaktionsharz mit einem Feinstfüllstoff verwendet, so dass der Funktionsbereich 10 eine besonders glatte und porenarme, insbesondere porenfreie Oberfläche bildet. Die Verwendung des Reaktionsharzes als Werkstoff für den Funktionsbereich ermöglicht unterschiedliche Anpassungen, beispielsweise farbliche oder geometrische Anpassungen, wie in den Fig. 2, 3 und 4 zu sehen. Bei dem Ausführungsbeispiel gemäß Fig. 2 ist der Funktionsbereich 10 farblich abgesetzt.

Allgemein wird durch die Verwendung des gefüllten Reaktionsharzes für den Funktionsbereich 11 im Zusammenhang mit dem Führungsabschnitt 10 aus Polymerbeton ein Hybridwerkstoff geschaffen, dessen Eigenschaften lokal durch Anpassung der Zusammensetzung des Reaktionsharzes optimiert werden können. Dadurch kann nicht nur die Dichtigkeit des Funktionsbereichs, sondern auch dessen Festigkeitseigenschaften und die Schlagempfindlichkeit, d.h. die Sprödigkeit verbessert werden. Im Vordergrund steht aber mit Blick auf die Dichtigkeit eine Verringerung der Poren und Rauigkeit.

In den Fig. 2-4 ist der Funktionsbereich 11 als Formteil ausgebildet, das stoffschlüssig mit dem Führungsabschnitt 10 verbunden ist. Dies kann beispielsweise durch Verkleben oder, wenn das Bindemittel des Polymerbetons dem Reaktionsharz im Bereich des Funktionsbereichs entspricht, als monolithische Verbindung ausgebildet sein. Im letzteren Fall unterscheidet sich der Funktionsbereich vom Führungsabschnitt in erster Linie durch die Korngröße der Füllstoffe, die im Funktionsbereich kleiner als im Führungsabschnitt ist.

Anstelle des Formteils kann der Funktionsbereich als Schicht ausgebildet sein, die auf dem Beton des Führungsabschnittes stoffschlüssig aufgebracht ist.

Rinnenstränge jeweils gebildet aus Entwässerungsrinnen gemäß Fig. 2-4 haben den Vorteil, dass der Übergangsbereich zwischen den Rinnen flüssigkeitsdicht ist. Dies wird durch die glatte (dichte Fläche) im Bereich Rinne - Dichtung - Rinne erreicht.

Um diese glatten Fläche auch bei Rinnen aus gröberen Ausgangsmaterialen wie z.B. Beton oder Polymerbeton ausbilden zu können, wird bei der Herstellung in diesen Funktionsbereichen 11 ein zusätzlicher Werkstoff in Form einer Paste in die Rinne eingebracht. Dieser Werkstoff weist eine andere Zusammensetzung auf als Polymerbeton. Die Eigenschaften der pastösen Materialmischung als weitere Materialkomponente können dabei an die Anforderungen in diesem Funktionsbereich nach Art und Mengenanteil des Füllstoffes sowie durch Einstellung der Korngröße angepasst werden. Im Übergangsbereich zwischen Rinne zu Rinne kommt es insbesondere auf die Dichtigkeit an. Daher ist in diesem Bereich vor allem eine glatte porenfreie Oberfläche von besonderem Interesse. Wünschenswert sind aber auch verbesserte Festigkeitseigenschaften sowie eine geringe Schlagempfindlichkeit (Sprödigkeit). Grundsätzlich kann die Paste auf alle Bereichen der Rinne aufgetragen werden, an denen es erforderlich ist, die materiellen Eigenschaften, insbesondere hinsichtlich Porigkeit, Rauheit und Festigkeit zu verändern bzw. an besondere Funktionen anzupassen.

In dem Funktionsbereich 11 wird eine Materialmischung verwendet, die einen hohen Feinstfüllstoffgehalt sowie einen höheren Harzgehalt im Vergleich zu herkömmlichem Polymerbeton aufweist. Als Bindemittel werden duroplastische Harze verwendet. Dies hat den Vorteil, dass sich die aus dem zusätzlichen Material bestehende Komponente mit dem ebenfalls duroplastischen Polymerbeton, z.B. während des Herstellungsprozesses der Rinne, verbindet. Ein zusätzlicher Klebstoff wird nicht benötigt.

Die pastöse Materialmischung ist auch in der Anwendung als Kleber zwischen zwei duroplastischen Polymerbetonen in der Lage einen kraftschlüssigen Verbund herzustellen.

Es ist ebenfalls denkbar, die zusätzliche Materialkomponente zur Bildung des Funktionsbereichs nachträglich an die Rinnenstirnfläche als vorgefertigter Formling, anzukleben bzw. mit einzugießen.

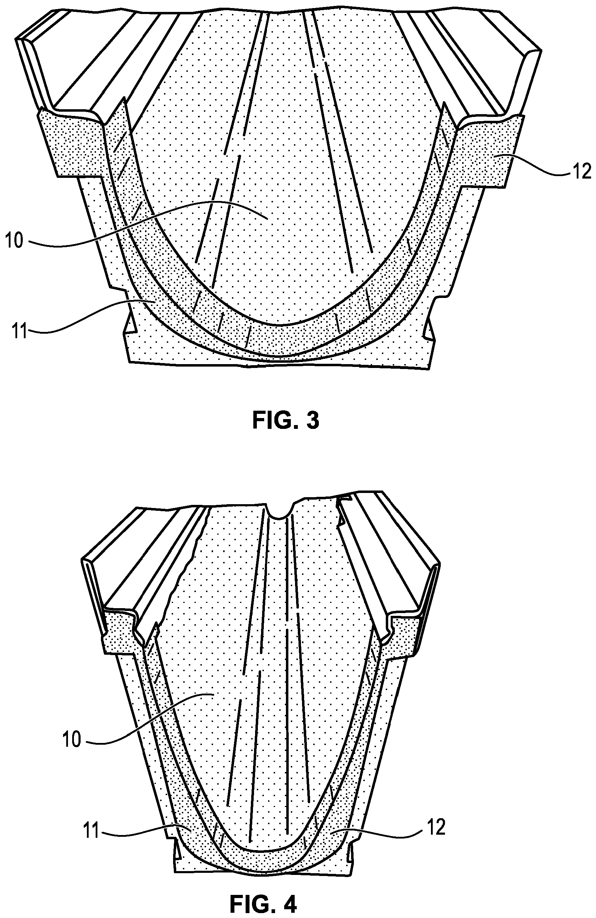

Um die zusätzliche Materialkomponente farblich an den verwendeten Polymerbeton anzupassen, können der pastösen Materialmischung entsprechende farbgebende Stoffe/Pigmente zugegeben werden (s. Fig. 2, 3).

Diese Pasten-Materialeigenschaft ist gegenüber Polymerbetonen in vielen Bereichen deutlich überlegen und als höherwertig gegenüber Polymerbeton anzusehen. Besonders bei der mechanischen Belastbarkeit bietet die Anwendung von Materialmischungen (Paste) gegenüber Polymerbeton deutliche Vorteile, vor allem hinsichtlich der Dauerhaftigkeit. Im Vergleich zu Polymerbeton haben pastöse Materialmischungen auch nach dem Aushärten praktisch keine Porosität und demzufolge auch keine Wasseraufnahmefähigkeit. Das macht sie z.B. gegen Frost-/Tausalzbeanspruchungen absolut unempfindlich.

Die Materialmischung hat folgende Materialeigenschaften.

### Biegefestigkeit

Die Biegefestigkeit der ausgehärteten, ursprünglich pastösen Materialmischung liegt zwischen 10 - 60 N/mm² und ist somit im Bereich von ultrahochfesten Materialzusammensetzungen zu sehen. Damit hat die Materialmischung, welche i. d. Regel zwischen 18 - 28 N/mm² liegt, generell eine dreimal höhere Biegefestigkeit, und ist somit deutlich materialstabiler als Polymerbeton.

Ein besonderer Vorteil dieser hohen Materialfestigkeiten liegt außerdem darin, dass man durch Einstellung eines relativ niedrigen E-Moduls eine hohe Unempfindlichkeit des Polymerbetons gegenüber Stoß- und Schlagbeanspruchungen erzielen kann. Gleichzeitig ergibt sich dadurch eine hohe Widerstandsfähigkeit gegenüber Wechsel- bzw. Schwingbelastungen (Schwellfestigkeit) sowie eine hohe Abriebfestigkeit an Oberflächen von Materialmischungen, sogenannten Pasten-Bauteilen.

### Hohe Frühfestigkeit (auch bei niedrigen Temperaturen)

Aufgrund des Erhärtungsmechanismus wird die Endfestigkeit von Materialmischungen (Paste) schon < 10 Minuten Aushärtungszeit erreicht. Dies stellt einen enormen Vorteil gegenüber Polymerbetonen dar, da selbst speziell zusammengesetzte frühhochfeste Polymerbetone diese Zeit nicht erreichen können.

### Chemische Beständigkeit

Die Materialmischung ist in dem Medium, das den Polymerbetonfestlegungen, gemäß ACO-Polymerbeton Beständigkeitsliste Stand 01/2012 entspricht, beständig. Ein Austausch der Harzmatrix der Materialmischung gegen einen höherwertigen und chemikalientauglichen Harztyp ist jederzeit möglich.

### Geringe Schwindrissneigung

Materialmischungen neigen zu einem höheren Frühschwinden als Polymerbetone. Da die Endfestigkeit allerdings schon sehr früh erreicht wird und der Erhärtungsprozess dann vollständig abgeschlossen ist, besteht danach praktisch keine Gefahr einer Oberflächenrissbildung im frühen Alter.

Die hohe Biegezugfestigkeit und die Möglichkeit, in einem bestimmten Bereich das E-Modul auf die Anwendung anzupassen, verringern zusätzlich die Gefahr einer Rissbildung im Einbauzustand. Sollten dennoch Risse auftreten, wird durch die dichte Bindemittelmatrix in Kombination mit den hohen Festigkeiten ein weiterer Schadensfortschritt weitgehend verhindert.

### Hohe Dichtigkeit

Da Materialmischungen (Pasten) praktisch keine Porosität aufweisen, zeigen sie keine Bestrebungen, Flüssigkeit aufzunehmen. Materialmischungen (Pasten) können somit als absolut dicht bezeichnet werden. Daraus resultieren weitere positive Eigenschaften. Sie sind in chemisch angreifender Umgebung beständig, widerstehen problemlos Frost- bzw. Frost-Tausalz-Belastungen und sind damit in dieser Hinsicht optimal für dauerbeanspruchte Einsatzgebiete geeignet.

### Sedimentationsstabilität

Aufgrund der hohen Viskosität des Systems ist eine hervorragende Sedimentationsstabilität gegeben.

### Entsorgung

Da sich die Polymerisate des Styrols grundwasserneutral verhalten, können Reste des Polymerisationsproduktes als Hausmüll deponiert werden. Einer Wiederverwertung als Zuschlagstoff bzw. Granulat steht seitens der Umweltbelastung nichts im Wege.

Eine Gefährdung durch lungengängige Fasern bei Fräs- und Bohrarbeiten kann bei Materialmischungen (Paste) ausgeschlossen werden, da keine verstärkenden Fasermaterialien vorhanden sind. Bei einem Reststyrolgehalt in Höhe der festgelegten Werte und einem Konzentrationsgradienten in der Wandung kann von einer Kontamination des Grundwassers durch Oberflächenkontakt mit der Rinnenwandung nicht gesprochen werden.

### Recycling

Eine Wiederverwertung des ausgehärteten Kombinationswerkstoffs (Materialmischung und Polymerbeton) als Trockensubstitut ist ohne Umweltbelastung möglich.

### Gute Dauerhaftigkeit

Die oben genannten Materialeigenschaften der Materialmischung (Paste) sind ausschlaggebend dafür, dass diese als dauerhaft beständig für ein breites Anwendungsspektrum angesehen werden kann. Sie weist dabei, vor allem aufgrund ihrer Dichtigkeit, Vorteile gegenüber Polymerbetonen auf.

Ein Austausch des Bindemittels (Harz) in der Materialmischung (Paste) gegen einen höherwertigen und chemikalientauglichen Typ ist jederzeit möglich. Ein negativer Einfluss auf die mechanischen Eigenschaften entsteht dadurch nicht.

### Material-Eigenschaften

2K-gefüllter Reaktionsharzformstoff bestehend aus UP-Harz basierenden Bindemittel (Reaktionsharz), Katalysator (Härter) und mineralischen Füllstoffen, insbesondere Mehlen und Feinstfüllstoffen (Festkörperanteile>50%).

Die Materialmischung besteht aus gefülltem Reaktionsharzformstoff in Anlehnung an DIN EN 18820 Teil 1 (Revision.1 07/2015).

| Art der Prüfung | Testergebnisse |
|---|---|
| Wichte | > 1,2 g/mL |
| Chemische Beständigkeit | gemäß ACO-Polymerbeton Beständigkeitsliste Stand 01/2012 entspricht (pH 1 - pH 12) |
| E - Modul | > 12000 N/mm² |
| Ausreißfestigkeit | > 4 N/mm² |
| Biegezugfestigkeit | > 10 N/mm² |
| Druckfestigkeit | > 50 N/mm² |
| Scherfestigkeit | > 4 N/mm² |
| Abriebverhalten | < 5 mm |
| Widerstand gegen Hochdruckspülung | Mindestens 120 bar |
| Umweltverträglichkeit | Gemäß KTW Empfehlung Kategorie C |
| Deponie- und Recycelfähigkeit | Geltende Richtlinien |

## Patentansprüche

1. Vorrichtung zum Führen von Flüssigkeit, nämlich Entwässerungsrinne, mit einem Führungsabschnitt (10) und wenigstens einem stirnseitig am Ende der Entwässerungsrinne angeordneten Funktionsbereich (11), wobei der Führungsabschnitt (10) aus Beton gebildet ist, der ein Bindemittel und einen Füllstoff mit einer ersten Korngröße K₁ aufweist, und wobei der Funktionsbereich (11) zumindest teilweise aus einem gefüllten Reaktionsharz gebildet ist, wobei das Reaktionsharz einen Füllstoff mit einer zweiten Korngröße K₂ aufweist, wobei K₂ < K₁ und wobei eine Bestimmung der Korngröße mittels eines Grindometertests in Anlehnung an die EN ISO 1524 erfolgt ist.

2. Vorrichtung nach Anspruch 1
**dadurch gekennzeichnet, dass**
die zweite Korngröße K₂ höchstens 1 mm, insbesondere höchstens 500 µm, insbesondere höchstens 250 µm beträgt.

3. Vorrichtung nach Anspruch 1 oder 2
**dadurch gekennzeichnet, dass**
der Funktionsbereich (11) eine Oberflächenrauheit k [mm] von 0,02 bis 0,05, insbesondere 0,03 bis 0,04, aufweist.

4. Vorrichtung nach einem der vorhergehenden Ansprüche
**dadurch gekennzeichnet, dass**
der Beton ein Polymerbeton ist.

5. Vorrichtung nach einem der vorhergehenden Ansprüche, insbesondere nach Anspruch 4,
**dadurch gekennzeichnet, dass**
die Bindemittel des Betons und das Reaktionsharz aus demselben Werkstoff, insbesondere einem duroplastischen Harz, bestehen.

6. Vorrichtung nach einem der vorhergehenden Ansprüche, insbesondere nach Anspruch 4 oder 5,
**dadurch gekennzeichnet, dass**
der Beton, insbesondere Polymerbeton, einen Bindemittelanteil H₁ und das Reaktionsharz einen Bindemittelanteil H₂ aufweisen, wobei H₂ > H₁.

7. Vorrichtung nach einem der vorhergehenden Ansprüche, insbesondere einem der Ansprüche 4 bis 6,
**dadurch gekennzeichnet, dass**
der Bindemittelanteil H₂ > 20 Gew.-%, insbesondere > 30 Gew.-%, insbesondere > 50 Gew.-%, beträgt.

8. Vorrichtung nach einem der vorhergehenden Ansprüche,
**dadurch gekennzeichnet, dass**
der Funktionsbereich (11) eine Schicht aus dem gefüllten Reaktionsharz bildet, die auf dem Führungsabschnitt (10) aus Beton angeordnet ist.

9. Vorrichtung nach Anspruch 8,
**dadurch gekennzeichnet, dass**
die Dicke der Schicht weniger als 2 mm, insbesondere von 1 mm bis 1 µm beträgt.

10. Vorrichtung nach einem der Ansprüche 1-7,
**dadurch gekennzeichnet, dass**
der Funktionsbereich (11) ein Formteil (12) aus dem gefüllten Reaktionsharz bildet, dessen Querschnittsform im Wesentlichen der Querschnittsform des Führungsabschnitts (10) aus Beton entspricht, wobei das Formteil (12) und der Führungsabschnitt (10) fluchtend angeordnet sind.

11. Verfahren zum Herstellen einer Entwässerungsrinne, nach Anspruch 1, bei dem das gefüllte Reaktionsharz in pastöser Form auf den Führungsabschnitt (10) aus Beton zur Bildung des Funktionsbereiches (11) aufgebracht und ausgehärtet wird oder ein Formteil (12) aus dem gefüllten Reaktionsharz mit dem Führungsabschnitt (10) aus Beton zur Bildung des Funktionsbereiches (11) verbunden wird.

## Claims

1. A device for guiding liquid, namely a drainage gutter, having a guiding section (10) and at least one functional area (11) arranged on the face at the end of the drainage gutter, wherein the guiding section (10) is formed of concrete which has a binder and a filler having a first grain size K₁, and wherein the functional area (11) is at least in part formed of a filled reaction resin, wherein the reaction resin has a filler having a second grain size K₂, wherein K₂ < K₁, and wherein a determination of the grain size has been made by means of a grindometer test following EN ISO 1524.

2. The device according to claim 1,
**characterized in that**
the second grain size K₂ is at most 1 mm, in particular at most 500 µm, in particular at most 250 µm.

3. The device according to claim 1 or 2,
**characterized in that**
the functional area (11) has a surface roughness k [mm] of 0.02 to 0.05, in particular 0.03 to 0.04.

4. The device according to any one of the preceding claims,
**characterized in that**
the concrete is a polymer concrete.

5. The device according to any one of the preceding claims, in particular according to claim 4,
**characterized in that**
the binder of the concrete and the reaction resin consist of the same material, in particular of a thermosetting resin.

6. The device according to any one of the preceding claims, in particular according to claim 4 or 5,
**characterized in that**
the concrete, in particular the polymer concrete, has a binder portion H₁, and the reaction resin has a binder portion H₂, wherein H₂ > H₁.

7. The device according to any one of the preceding claims, in particular according to any one of claims 4 to 6,
**characterized in that**
the binder portion H₂ amounts to > 20 % by weight, in particular > 30 % by weight, in particular > 50 % by weight.

8. The device according to any one of the preceding claims,
**characterized in that**
the functional area (11) forms a layer of the filled reaction resin, which is arranged on the guiding section (10) of concrete.

9. The device according to claim 8,
**characterized in that**
the thickness of the layer is less than 2 mm, in particular 1 mm to 1 µm.

10. The device according to any one of claims 1 to 7,
**characterized in that**
the functional area (11) forms a moulded part (12) made of the filled reaction resin, the cross-sectional shape of which essentially corresponds to the cross-sectional shape of the guiding section (10) of concrete, wherein the moulded part (12) and the guiding section (10) are arranged to be flush.

11. A method for manufacturing a drainage gutter, according to claim 1, in which the filled reaction resin is applied to the guiding section (10) of concrete in pasty form and is cured for forming the functional area (11), or a moulded part (12) of the filled reaction resin is connected with the guiding section (10) of concrete for forming the functional area (11).

## Revendications

1. Dispositif de guidage de liquide, à savoir rigole d'écoulement, présentant une section de guidage (10) et au moins une zone fonctionnelle (11) disposée côté frontal à l'extrémité de la rigole d'écoulement, sachant que la section de guidage (10) est formée à partir de béton qui présente un liant et une matière de remplissage d'une première taille de grain K₁, et sachant que la zone fonctionnelle (11) est formée au moins en partie à partir d'une résine de réaction remplie, sachant que la résine de réaction présente une matière de remplissage d'une deuxième taille de grain K₂, sachant que K₂ < K₁ et sachant qu'une détermination de la taille de grain est effectuée moyennant un test par grindomètre en référence à la norme EN ISO 1524.

2. Dispositif selon la revendication 1,
**caractérisé en ce que**
la deuxième taille de grain K₂ est d'au plus 1 mm, en particulier d'au plus 500 µm, en particulier d'au plus 250 µm.

3. Dispositif selon la revendication 1 ou 2,
**caractérisé en ce que**
la zone fonctionnelle (11) présente une rugosité de surface k [mm] de 0,02 à 0,05, en particulier de 0,03 à 0,04.

4. Dispositif selon l'une des revendications précédentes,
**caractérisé en ce que**
le béton est un béton de polymère.

5. Dispositif selon l'une des revendications précédentes, en particulier selon la revendication 4,
**caractérisé en ce que**
le liant du béton et la résine de réaction sont composés du même matériau, en particulier d'une résine thermodurcissable.

6. Dispositif selon l'une des revendications précédentes, en particulier selon la revendication 4 ou 5,
**caractérisé en ce que**
le béton, en particulier le béton de polymère, présente une part de liant H₁ et la résine de réaction présente une part de liant H₂, sachant que H₂ > H₁.

7. Dispositif selon l'une des revendications précédentes, en particulier selon l'une des revendications 4 à 6,
**caractérisé en ce que**
la part de liant H₂ est > 20 % en poids, en particulier > 30 % en poids, en particulier > 50 % en poids.

8. Dispositif selon l'une des revendications précédentes,
**caractérisé en ce que**
la zone fonctionnelle (11) forme une couche composée de la résine de réaction remplie, laquelle est disposée sur la section de guidage (10) en béton.

9. Dispositif selon la revendication 8,
**caractérisé en ce que**
l'épaisseur de la couche est de moins de 2 mm, en particulier de 1 mm à 1 µm.

10. Dispositif selon l'une des revendications 1 à 7,
**caractérisé en ce que**
la zone fonctionnelle (11) forme une pièce moulée (12) composée de la résine de réaction remplie, dont la forme en coupe transversale correspond sensiblement à la forme en coupe transversale de la section de guidage (10) en béton, sachant que la pièce moulée (12) et la section de guidage (10) sont disposées en alignement.

11. Procédé de fabrication d'une rigole d'écoulement selon la revendication 1, dans lequel la résine de réaction remplie est apposée sous forme pâteuse sur la section de guidage (10) en béton pour former la zone fonctionnelle (11) et est durcie ou une pièce moulée (12) composée de la résine de réaction remplie est reliée à la section de guidage (10) en béton pour former la zone fonctionnelle (11).
